(19)

Europäisches Patentamt
European Patent Office
Office européen des brevets

(11) EP 4 501 874 A1

(12) EUROPEAN PATENT APPLICATION
published in accordance with Art. 153(4) EPC

(43) Date of publication:
05.02.2025 Bulletin 2025/06

(51) International Patent Classification (IPC):
$C03C\ 3/14^{(2006.01)}$     $C03C\ 3/12^{(2006.01)}$
$C03C\ 3/145^{(2006.01)}$     $C03C\ 3/15^{(2006.01)}$
$C03C\ 3/155^{(2006.01)}$     $G02B\ 1/00^{(2006.01)}$

(21) Application number: 23779081.1

(52) Cooperative Patent Classification (CPC):
C03C 3/12; C03C 3/14; C03C 3/145; C03C 3/15;
C03C 3/155; G02B 1/00

(22) Date of filing: 24.02.2023

(86) International application number:
PCT/JP2023/006625

(87) International publication number:
WO 2023/189051 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.03.2022 JP 2022053320

(71) Applicant: NIKON CORPORATION
Tokyo 140-8601 (JP)

(72) Inventor: KOIDE Tetsuya
Tokyo 140-8601 (JP)

(74) Representative: Viering, Jentschura & Partner
mbB
Patent- und Rechtsanwälte
Grillparzerstraße 14
81675 München (DE)

(54) **OPTICAL GLASS, OPTICAL ELEMENT, INTERCHANGEABLE LENS FOR CAMERA, OBJECTIVE LENS FOR MICROSCOPE, CEMENTED LENS, OPTICAL SYSTEM, OPTICAL DEVICE, REFLECTIVE ELEMENT, AND POSITION MEASURING DEVICE**

(57)     An optical glass contains, by mol%, 40 to 85% of a content rate of $TeO_2$, 10 to 400 of a content rate of ZnO, at least one of $B_2O_3$ and $Bi_2O_3$, and at least one of $La_2O_3$ and $WO_3$.

Fig. 7

## Description

Technical Field

The present invention relates to optical glass, an optical element, an interchangeable camera lens, a microscope objective lens, a cemented lens, an optical system, an optical device, a reflective element, and a position measuring device. The present invention claims priority to Japanese Patent Application No. 2022-053320, filed on March 29, 2022, the contents of which are incorporated by reference herein in its entirety in designated states where the incorporation of documents by reference is approved.

Background Art

In recent years, imaging equipment and the like including an image sensor with a large number of pixels have been developed, and an optical glass that has a refractive index of approximately 2 in the near-infrared range while having a high refractive index, high dispersion, and low abnormal dispersion has been demanded as an optical glass to be used for such equipment.

Citation List

Patent Literature

PTL 1: JP 2006-219365 A

Summary of Invention

A first aspect according to the present invention is an optical glass containing, by mol%, 40 to 85% of a content rate of $TeO_2$, 10 to 40% of a content rate of ZnO, at least one of $B_2O_3$ and $Bi_2O_3$, and at least one of $La_2O_3$ and $WO_3$. An optical glass contains, by mol%, 40 to 85% of a content rate of $TeO_2$, 10 to 40% of a content rate of ZnO, 0 to 10% of a content rate of $B_2O_3$, 0 to 10% of a content rate of $Bi_2O_3$, and at least one of $Y_2O_3$, $La_2O_3$, and $Gd_2O_3$.

A second aspect according to the present invention is an optical element using the optical glass described above.

A third aspect according to the present invention is an optical device including the optical element described above.

A fourth aspect according to the present invention is a reflective element including the optical element described above.

A fifth aspect according to the present invention is a position measuring device including the reflective element described above.

A sixth aspect according to the present invention is an interchangeable camera lens including the optical element described above.

A seventh aspect according to the present invention is a microscope objective lens including the optical element described above.

An eighth aspect according to the present invention is a cemented lens including a first lens element and a second lens element, wherein at least one of the first lens element and the second lens element is the optical glass described above.

A ninth aspect according to the present invention is an optical system including the cemented lens described above.

A tenth aspect according to the present invention is an interchangeable camera lens including the optical system described above.

An eleventh aspect according to the present invention is a microscope objective lens including the optical system described above.

A twelfth aspect according to the present invention is an optical device including the optical system described above.

Brief Description of Drawings

FIG. 1 is a perspective view illustrating one example of an optical device according to the present embodiment as an imaging device.

FIG. 2 is a schematic view illustrating another example of the optical device according to the present embodiment as an imaging device, and is a front view of the imaging device.

FIG. 3 is a schematic view illustrating another example of the optical device according to the present embodiment as an imaging device, and is a back view of the imaging device.

FIG. 4 is a block diagram illustrating one example of a configuration of a multi-photon microscope according to the present embodiment.

FIG. 5 is a schematic view illustrating one example of a cemented lens according to the present embodiment.

FIG. 6A and FIG. 6B are schematic views illustrating one example of a position measuring device using a reflective element according to the present embodiment.

FIG. 7 is a graph in which an $\nu_d$ and $P_{g,\,F}$ in each example are plotted.

Description of Embodiments

Hereinafter, description is made on an embodiment of the present invention (hereinafter, referred to as the "present embodiment"). The present embodiment described below is an example for describing the present invention, and is not intended to limit the present invention to the contents described below. The present invention may be modified as appropriate and carried out without departing from the gist thereof.

An optical glass according to the present embodiment is an optical glass containing, by mol%, 40 to 85% of a content rate of $TeO_2$, 10 to 40% of a content rate of $ZnO$, at least one of $B_2O_3$ and $Bi_2O_3$, and at least one of $La_2O_3$ and $WO_3$. An optical glass contains, by mol%, 40 to 85% of a content rate of $TeO_2$, 10 to 40% of a content rate of $ZnO$, 0 to 10% of a content rate of $B_2O_3$, 0 to 10% of a content rate of $Bi_2O_3$, and at least one of $Y_2O_3$, $La_2O_3$, and $Gd_2O_3$.

In the present specification, it is assumed that a content rate of each of all the components is expressed with mol% of each component with respect to a total molar number of the glass in terms of an oxide-converted composition unless otherwise stated. Note that, while assuming that oxides, complex salt, and the like, which are used as raw materials as glass constituent components in the present embodiment, are all decomposed and turned into oxides at the time of melting, the oxide-converted composition described herein is a composition in which each component contained in the glass is expressed with a total molar number of the oxides as 100 mol%.

The expression that a content rate of Q is "from 0 to N%" is an expression including a case in which the component Q is not contained and a case in which the content rate of the component Q exceeds 0% and is equal to or less than N%.

The expression that "the component Q is not contained" means that no component Q is substantially contained, and indicates that the content rate of the constituent component is at a level substantially equal to or less than that of impurities. The level substantially equal to or less than that of impurities means, for example, less than 0.01%.

The expression "devitrification resistance stability" means resistance of the glass with respect to devitrification. Herein, "devitrification" means a phenomenon where the glass loses transparency due to crystallization, phase separation, or the like that occurs when the glass is heated above the glass transition temperature or is cooled below the liquid phase temperature from a molten state.

The optical glass according to the present embodiment can be achieved as an optical glass that has a refractive index of approximately 2 in the near-infrared range while having a high refractive index, high dispersion, and low abnormal dispersion.

Description is made below on a component composition of the optical glass according to the present embodiment.

$TeO_2$ is a component that can improve the refractive index and the devitrification resistance stability. From such a viewpoint, by mol%, a content rate of $TeO_2$ is from 40 to 85%. A lower limit of this content rate is preferably 45%, more preferably 47%, further preferably 50%. An upper limit of this content rate is preferably 80%, more preferably 70%, further preferably 65%.

$ZnO$ is a component that improves the devitrification resistance stability and reduces the partial dispersion ratio. When a content rate of $ZnO$ is excessively reduced, the devitrification resistance stability is likely to be degraded. When a content rate of $ZnO$ is excessively increased, the partial dispersion ratio is likely to be reduced. From such a viewpoint, by mol%, a content rate of $ZnO$ is from 10 to 40%. A lower limit of this content rate is preferably 120, more preferably 15%, further preferably 18%. An upper limit of this content rate is preferably 350, more preferably 30%, further preferably 25%.

The glass according to the present embodiment preferably contains at least one component of $B_2O_3$ and $Bi_2O_3$ in addition to $TeO_2$ and $ZnO$. For example, when $B_2O_3$ is contained, $Bi_2O_3$ may or may not be added to the optical glass of the present embodiment. Further, at least one component of $La_2O_3$ and $WO_3$ is preferably contained. For example, when $La_2O_3$ is contained, $WO_3$ may or may not be added to the optical glass of the present embodiment.

$B_2O_3$ is a component that constitutes a network-forming oxide. Since $B_2O_3$ is a highly volatile component, excessive introduction thereof may cause fluctuations in the composition of the glass during manufacturing, which may lead to the manifestation of stria. From such a viewpoint, by mol%, a content rate of $B_2O_3$ is from 0 to 20%. A lower limit of this content rate is preferably 20, more preferably 40, further preferably 5%. An upper limit of this content rate is preferably 16%, more preferably 14%, further preferably 12%.

$Bi_2O_3$ is a component that improves the refractive index and the partial dispersion ratio. When a content rate of $Bi_2O_3$ is excessively increased, a transmittance is likely to be degraded, and dispersion is likely to be increased. When a content rate of $Bi_2O_3$ is excessively reduced, meltability is likely to be degraded. From such a viewpoint, by mol%, a content rate of $Bi_2O_3$ is from 0 to 10%. A lower limit of this content rate is preferably 20, more preferably 30, further preferably 4%. An upper limit of this content rate is preferably 90, more preferably 80, further preferably 7%.

$La_2O_3$ exerts an effect of improving the refractive index without degrading low dispersion, and can maintain the devitrification resistance stability of the glass. However, when the content rate thereof is increased, the specific gravity thereof is likely to be increased. From such a viewpoint, by mol%, a content rate of $La_2O_3$ is from 0 to 15%. A lower limit of this content rate is preferably 20, more preferably 40, further preferably 6%. An upper limit of this content rate is preferably 13%, more preferably 110, further preferably 10%.

From such a viewpoint of a transmittance, by mol%, a content rate of $WO_3$ is from 0 to 20%. A lower limit of this content rate is preferably 20, more preferably 40, further preferably 6%. An upper limit of this content rate is preferably 18%, more preferably 16%, further preferably 14%.

$Y_2O_3$ is a component that can improve the refractive index without degrading low dispersion, and can further improve the devitrification resistance stability particularly when it coexists with $La^{3+}$ in the glass. From such a viewpoint, by mol%, a content rate of $Y_2O_3$ is from 0 to 15%. A lower limit of this content rate is preferably 10, more preferably 20, further preferably 3%. An upper limit of this content rate is preferably 13%, more preferably 10%, further preferably 8%.

$Gd_2O_3$ is a component that can improve the refractive index without degrading low dispersion, and can further improve the devitrification resistance stability particularly when it coexists with $La^{3+}$ in the glass. From such a viewpoint, by mol%, a content rate of $Gd_2O_3$ is from 0 to 15%. A lower limit of this content rate is preferably 10, more preferably 20, further preferably 3%. An upper limit of this content rate is preferably 13%, more preferably 10%, further preferably 8%.

The optical glass according to the present embodiment preferably contains at least one of $Y_2O_3$, $La_2O_3$, and $Gd_2O_3$. By mol%, a total content rate of $Y_2O_3$, $La_2O_3$, and $Gd_2O_3$ ($\Sigma Ln_2O_3$, where Ln = Y, La, Gd) is from 0 to 15%. A lower limit of this content rate preferably exceeds 0%, is more preferably 30, further preferably 4%. An upper limit of this content rate is preferably 13%, more preferably 110, further preferably 10%. When ($Y_2O_3$ + $La_2O_3$ + $Gd_2O_3$) falls within such a range, the refractive index and the devitrification resistance stability of the optical glass can be improved.

$Li_2O$ is a component that reduces $\Delta P_{g,F}$ and improves the glass meltability. When this content rate is excessively increased, the devitrification resistance stability is degraded, and the abbe number is increased. From such a viewpoint, by mol%, a content rate of $Li_2O$ is from 0 to 10%. A lower limit of this content rate is preferably 10, more preferably 20, further preferably 3%. An upper limit of this content rate is preferably 80, more preferably 60, further preferably 5%.

$Na_2O$ is a component that reduces $\Delta P_{g,F}$ and improves the glass meltability. When this content rate is excessively increased, the devitrification resistance stability is degraded, and the abbe number is increased. From such a viewpoint, by mol%, a content rate of $Na_2O$ is from 0 to 10%. A lower limit of this content rate is preferably 10, more preferably 20, further preferably 3%. An upper limit of this content rate is preferably 80, more preferably 60, further preferably 5%.

$K_2O$ is a component that reduces $\Delta P_{g,F}$ and improves the glass meltability, and exerts a great effect of degrading the devitrification resistance stability of the glass and increasing the abbe number as compared to $Li_2O$ and $Na_2O$. From such a viewpoint, by mol%, a content rate of $K_2O$ is from 0 to 10%. A lower limit of this content rate is preferably 10, more preferably 20, further preferably 3%. An upper limit of this content rate is preferably 80, more preferably 60, further preferably 5%.

From such a viewpoint of high dispersion, by mol%, a content rate of SrO is from 0 to 5%. A lower limit of this content rate is preferably 0.5%, more preferably 10, further preferably 2%. An upper limit of this content rate is preferably 40, more preferably 3.5%, further preferably 3%.

BaO is a component that improves the devitrification resistance stability of the glass without significantly increasing $\Delta P_{g,F}$. When BaO is not contained, the devitrification resistance stability of the glass is degraded. From such a viewpoint, by mol%, a content rate of BaO is from 0 to 5%. A lower limit of this content rate is preferably 0.5%, more preferably 10, further preferably 2%. An upper limit of this content rate is preferably 40, more preferably 3.5%, further preferably 3%.

From such a viewpoint of high dispersion, by mol%, a content rate of CaO is from 0 to 10%. A lower limit of this content rate is preferably 10, more preferably 20, further preferably 3%. An upper limit of this content rate is preferably 90, more preferably 80, further preferably 6%.

MgO is a component that increases the abbe number, and exerts a great effect of increasing $\Delta P_{g,F}$ as compared to BaO. From such a viewpoint, by mol%, a content rate of MgO is from 0 to 10%. A lower limit of this content rate is preferably 10, more preferably 20, further preferably 3%. An upper limit of this content rate is preferably 90, more preferably 80, further preferably 7%.

$Al_2O_3$ is a component that can improve meltability during manufacturing of the optical glass and the devitrification resistance stability of the optical glass. From such a viewpoint, by mol%, a content rate of $Al_2O_3$ is from 0 to 5%. A lower limit of this content rate is preferably 0.5%, more preferably 10, further preferably 1.5%. An upper limit of this content rate is preferably 40, more preferably 30, further preferably 2%.

$TiO_2$ can improve the refractive index, and can simultaneously maintain the low specific gravity. From such a viewpoint of such effects and content rates of rare earth components and transition metal components, by mol%, a content rate of $TiO_2$ is from 0 to 5%. A lower limit of this content rate is preferably 0.5%, more preferably 10, further preferably 1.5%. An upper limit of this content rate is preferably 40, more preferably 30, further preferably 2%.

$ZrO_2$ exerts an effect of improving the devitrification resistance stability and the refractive index while maintaining low dispersion. When this content rate is excessively reduced, high dispersion is caused. When it exceeds 5%, the glass is likely to lose transparency. From such a viewpoint, by mol%, a content rate of $ZrO_2$ is from 0 to 5%. A lower limit of this content rate is preferably 0.5%, more preferably 10, further preferably 1.5%. An upper limit of this content rate is preferably 40, more preferably 3.5%, further preferably 3%.

$Nb_2O_5$ can further improve low dispersion of the glass. From such a viewpoint, by mol%, a content rate of $Nb_2O_5$ is from 0 to 5%. A lower limit of this content rate is preferably 0.5%, more preferably 10, further preferably 1.5%. An upper limit of this content rate is preferably 40, more preferably 3.5%, further preferably 3%.

$Ta_2O_5$ exerts an effect of improving the devitrification resistance stability while maintaining low dispersion. From such a viewpoint, by mol%, a content rate of $Ta_2O_5$ is from 0 to 5%. A lower limit of this content rate is preferably 0.5%, more preferably 10, further preferably 1.5%. An upper limit of this content rate is preferably 40, more preferably 3.5%, further preferably 3%.

A ratio of a total content rate (mol%) of $Bi_2O_3$, $B_2O_3$, $Y_2O_3$, $La_2O_3$, and $Gd_2O_3$ with respect to a content rate (mol%) of $TeO_2$ (($Bi_2O_3 + B_2O_3 + Y_2O_3 + La_2O_3 + Gd_2O_3$)/$TeO_2$) is from 0 to 0.8. A lower limit of this ratio is preferably 0.2, more preferably 0.4, further preferably 0.6. An upper limit of this ratio is preferably 0.78, more preferably 0.76, further preferably 0.74. When $Bi_2O_3 + B_2O_3 + Y_2O_3 + La_2O_3 + Gd_2O_3$)/$TeO_2$ falls within such a range, the devitrification resistance stability can be maintained.

From such a viewpoint of meltability, the refractive index, and chemical durability, by mol%, a total content rate of $Li_2O$, $Na_2O$, and $K_2O$ ($\Sigma A_2O$, where A = Li, Na, K) is from 0 to 10%. A lower limit of this total content rate is preferably 0.5%, more preferably 10, further preferably 2%. An upper limit of this total content rate is preferably 80, more preferably 60, further preferably 5%.

A suitable combination of content rates of those includes 0 to 10% of a content rate of $Li_2O$, 0 to 10% of a content rate of $Na_2O$, and 0 to 10% of a content rate of $K_2O$. With such a combination, meltability can be improved and degradation of chemical durability can be prevented.

From such a viewpoint of meltability, the refractive index, and chemical durability, by mol%, a total content rate of SrO, BaO, CaO, MgO, and ZnO ($\Sigma EO$, where E = Sr, Ba, Ca, Mg, Zn) is from 10 to 40%. A lower limit of this total content rate is preferably 110, more preferably 12%, further preferably 13%. An upper limit of this total content rate is preferably 350, more preferably 30%, further preferably 25%. With such a combination, meltability can be maintained, and the refractive index and chemical durability can be improved.

A method of manufacturing the optical glass according to the present embodiment is not particularly limited, and a publicly-known method may be adopted. Conditions can be selected for the manufacturing conditions as appropriate. For example, there may be adopted a manufacturing method of blending raw materials such as oxides, carbonates, nitrates, and sulfates to obtain a target composition, melting the resultant at a temperature preferably from 1100 to 1400 degrees Celsius, uniforming the resultant by stirring, subjecting the resultant to defoaming, and then pouring the resultant in a mold for molding. A lower limit of the melting temperature described above is more preferably 1200 degrees Celsius, and an upper limit thereof is more preferably 1350 degrees Celsius, further preferably 1300 degrees Celsius. The optical glass thus obtained is processed to have a desired shape by performing re-heat pressing or the like as needed, and is subjected to polishing. With this, a desired optical element can be obtained.

A high-purity material with a small content rate of impurities is preferably used as the raw material. The high-purity material indicates a material including 99.85 mass% or more of a concerned component. By using the high-purity material, an amount of impurities is reduced, and hence an inner transmittance of the optical glass is likely to be increased.

For the purpose of, for example, performing fine adjustments of fining, coloration, decoloration, and optical constant values, a publicly-known component such as a fining agent, a coloring agent, a defoaming agent, and a fluorine compound may be added by an appropriate amount to the glass composition as needed. In addition to the above-mentioned components, other components may be added as long as the effect of the optical glass according to the present embodiment can be exerted.

Next, description is made on physical properties of the optical glass of the present embodiment.

From such a viewpoint of reduction in thickness of the lens, the optical glass according to the present embodiment preferably has a high refractive index (a large refractive index ($n_d$)). However, in general, as the refractive index ($n_d$) is higher, a transmittance is likely to be reduced. In view of such a circumstance, the refractive index ($n_d$) of the optical glass according to the present embodiment with respect to the d-line preferably falls within a range from 1.95 to 2.2. A lower limit of the refractive index ($n_d$) is more preferably 1.96, further preferably 1.98. An upper limit of the refractive index ($n_d$) is preferably 2.15, more preferably 2.1, further preferably 2.07.

From such a viewpoint of the usage of the optical glass according to the present embodiment in the near-infrared range, the refractive index ($n_{1550}$) of the optical glass according to the present embodiment with respect to the wavelength of 1550 nm preferably falls within a range from 1.9 to 2.1. A lower limit of the refractive index ($n_{1550}$) with respect to the wavelength of 1550 nm is more preferably 1.91, further preferably 1.93. An upper limit of the refractive index ($n_{1550}$) with respect to the wavelength of 1550 nm is more preferably 2.0, further preferably 1.997.

The abbe number ($v_d$) of the optical glass according to the present embodiment preferably falls within a range from 15 to 30. A lower limit of the abbe number ($v_d$) is more preferably 16, further preferably 18. An upper limit of the abbe number ($v_d$) is more preferably 27, further preferably 25.

From a viewpoint of lens aberration correction, the optical glass according to the present embodiment preferably has a large partial dispersion ratio ($P_{g, F}$). In view of such a circumstance, the partial dispersion ratio ($P_{g, F}$) of the optical glass according to the present embodiment preferably satisfies Expression (1) given below, or is preferably from 0.55 to 0.68.

$$-0.00607 \times vd + 0.752 < P_{g, F} < -0.00607 \times vd + 0.762 \cdots (1)$$

A lower limit of the partial dispersion ratio ($P_{g, F}$) is more preferably 0.57, further preferably 0.59. An upper limit of the partial dispersion ratio ($P_{g, F}$) is more preferably 0.68, further preferably 0.66.

From a viewpoint of lens aberration correction, the optical glass according to the present embodiment preferably has a large abnormal dispersibility ($\Delta P_{g, F}$). In view of such a circumstance, a value ($\Delta P_{g, F}$) indicating abnormal dispersibility of the optical glass according to the present embodiment is preferably equal to or more than 0.002. A lower limit of the value ($\Delta P_{g, F}$) indicating abnormal dispersibility is more preferably 0.004, further preferably 0.006. An upper limit of the value ($\Delta P_{g, F}$) indicating abnormal dispersibility is not particularly limit, and may be 0.040, for example.

From the viewpoint described above, the optical glass according to the present embodiment can be used suitably as an optical element provided to optical equipment, for example. Such an optical element includes a mirror, a lens, a prism, a filter, a reflection device, a reflective element, and the like. Examples of an optical system using the optical element described above include, for example, an objective lens, a condensing lens, an image forming lens, an interchangeable camera lens, and a position measuring device. Those optical systems may suitably be used for an imaging device such as an interchangeable-lens camera and a fixed lens camera, various types of an optical device of a microscope device such as a fluorescence microscope and a multi-photon microscope, and a position measuring device such as a laser tracker. Such an optical device is not limited to the imaging device and the microscope that are described above, and include, but is not limited to, a telescope, binoculars, a laser range finder, and a projector. An example thereof is described below.

<Imaging Device>

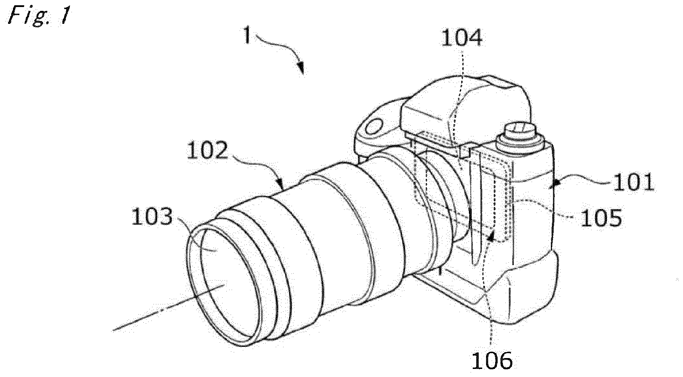

FIG. 1 is a perspective view illustrating one example of an optical device according to the present embodiment as an imaging device. An imaging device 1 is a so-called digital single-lens reflex camera (an interchangeable-lens camera), and a photographing lens 103 (an optical system) includes an optical element including, as a base material, the optical glass according to the present embodiment. A lens barrel 102 is mounted to a lens mount (not illustrated) of a camera body 101 in a removable manner. An image is formed with light, which passes through the lens 103 of the lens barrel 102, on a sensor chip (solid-state imaging elements) 104 of a multi-chip module 106 arranged on a back surface side of the camera body 101. The sensor chip 104 is a so-called bare chip such as a CMOS image sensor, and the multi-chip module 106 is, for example, a Chip On Glass (COG) type module including the sensor chip 104 being a bare chip mounted on a glass substrate 105.

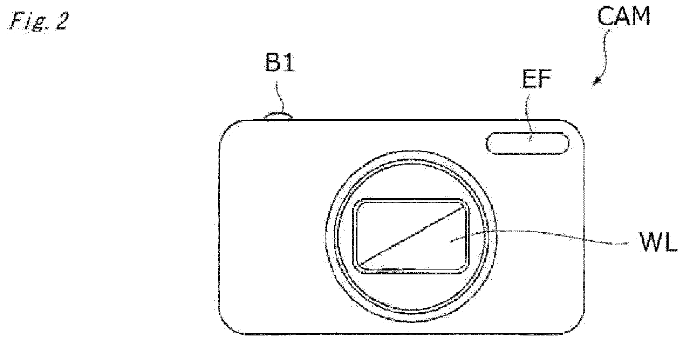

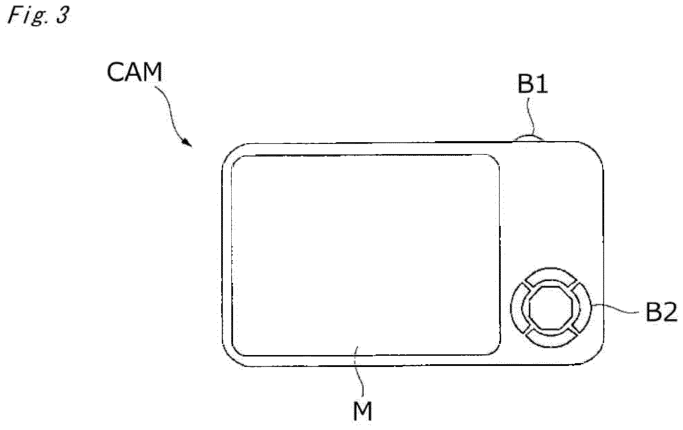

FIG. 2 and FIG. 3 are schematic views illustrating another example of the optical device according to the present embodiment as an imaging device. FIG. 2 is a front view of an imaging device CAM, and FIG. 3 is a back view of the imaging device CAM. The imaging device CAM is a so-called digital still camera (a fixed lens camera), and a photographing lens WL (an optical system) includes an optical element including, as a base material, the optical glass according to the present embodiment.

When a power button (not illustrated) of the imaging device CAM is pressed, a shutter (not illustrated) of the photographing lens WL is opened, and light from an object to be imaged (a body) is converged by the photographing lens WL and an image is formed on imaging elements arranged on an image surface. An object image formed on the imaging elements is displayed on a liquid crystal monitor M arranged on the back of the imaging device CAM. A photographer decides composition of the object image while viewing the liquid crystal monitor M, and then presses down a release button B1 to capture the object image on the imaging elements. The object image is recorded and stored in a memory (not illustrated).

An auxiliary light emitting unit EF that emits auxiliary light in a case that the object is dark and a function button B2 to be used for setting various conditions of the imaging device CAM and the like are arranged on the imaging device CAM.

A higher resolution, low chromatic aberration, and a smaller size are demanded for the optical system to be used in such a digital camera or the like. In order to achieve such demands, it is effective to use pieces of glass with dispersion properties different from one another as the optical system. In particular, glass that has a higher partial dispersion ratio ($P_{g, F}$) while achieving low dispersion is highly demanded. From such a viewpoint, the optical glass according to the present embodiment is suitable as a member of such optical equipment. Note that, in addition to the imaging device described above, examples of the optical equipment to which the present embodiment is applicable include a projector and the like. In addition to the lens, examples of the optical element include a prism and the like.

<Microscope>

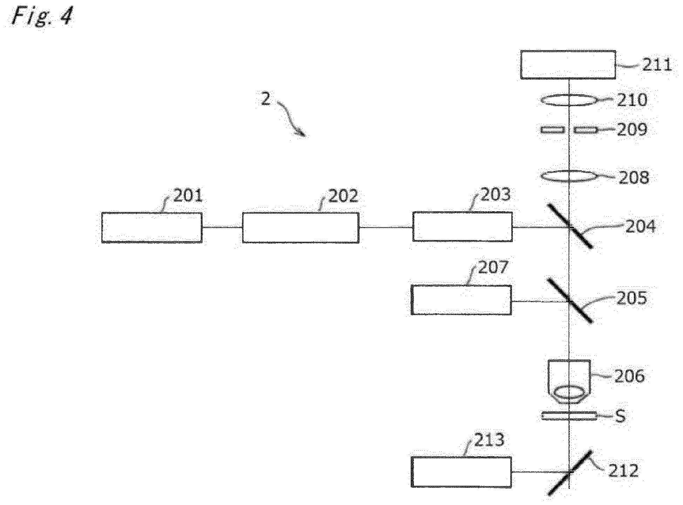

FIG. 4 is a block diagram illustrating an example of a configuration of a multi-photon microscope 2 according to the present embodiment. The multi-photon microscope 2 includes an objective lens 206, a condensing lens 208, and an image forming lens 210. At least one of the objective lens 206, the condensing lens 208, and the image forming lens 210 includes an optical element including, as a base material, the optical glass according to the present embodiment. Hereinafter, description is mainly made on the optical system of the multi-photon microscope 2.

A pulse laser device 201 emits ultrashort pulse light having, for example, a near-infrared wavelength (approximately 1000 nm) and a pulse width of a femtosecond unit (for example, 100 femtoseconds). In general, ultrashort pulse light immediately after being emitted from the pulse laser device 201 is linearly polarized light that is polarized in a predetermined direction.

A pulse division device 202 divides the ultrashort pulse light, increases a repetition frequency of the ultrashort pulse light, and emits the ultrashort pulse light.

A beam adjustment unit 203 has a function of adjusting a beam diameter of the ultrashort pulse light, which enters from the pulse division device 202, to a pupil diameter of the objective lens 206, a function of adjusting convergence and divergence angles of the ultrashort pulse light in order to correct chromatic aberration (a focus difference) on an axis of a wavelength of light emitted from a sample S and the wavelength of the ultrashort pulse light, a pre-chirp function (group velocity dispersion compensation function) providing inverse group velocity dispersion to the ultrashort pulse light in order to correct the pulse width of the ultrashort pulse light, which is increased due to group velocity dispersion at the time of passing through the optical system, and the like.

The ultrashort pulse light emitted from the pulse laser device 201 has a repetition frequency increased by the pulse division device 202, and is subjected to the above-mentioned adjustments by the beam adjustment unit 203. The ultrashort pulse light emitted from the beam adjustment unit 203 is reflected on a dichroic mirror 204 in a direction toward a dichroic mirror, passes through the dichroic mirror 205, and is converged by the objective lens 206, and the sample S is irradiated with the ultra short pulse light. In this state, an observation surface of the sample S may be scanned with the ultrashort pulse light through use of scanning means (not illustrated).

For example, when the sample S is subjected to fluorescence imaging, a fluorescent pigment by which the sample S is dyed is subjected to multi-photon excitation in an irradiated region with the ultrashort pulse light and the vicinity thereof on the sample S, and fluorescence having a wavelength shorter than a near infrared wavelength of the ultrashort pulse light (hereinafter, also referred to "observation light") is emitted.

The observation light emitted from the sample S in a direction toward the objective lens 206 is collimated by the objective lens 206, and is reflected on the dichroic mirror 205 or passes through the dichroic mirror 205 depending on the wavelength.

The observation light reflected on the dichroic mirror 205 enters a fluorescence detection unit 207. For example, the fluorescence detection unit 207 includes a barrier filter, a photo multiplier tube (PMT), or the like. The fluorescence detection unit 207 receives the observation light reflected on the dichroic mirror 205 and outputs an electronic signal depending on an amount of the light. The fluorescence detection unit 207 detects the observation light over the observation surface of the sample S, in conformity with the ultrashort pulse light scanning on the observation surface of the sample S.

Note that, all the observation light emitted from the sample S in a direction toward the objective lens 206 may be detected by the fluorescence detection unit 211 by excluding the dichroic mirror 205 from the optical path. In such a case, the observation light is de-scanned by scanning means (not illustrated), passes through the dichroic mirror 204, is converged by the condensing lens 208, passes through a pinhole 209 provided at a position substantially conjugate to a focal position of the objective lens 206, passes through the image forming lens 210, and enters the fluorescence detection unit 211.

For example, the fluorescence detection unit 211 includes a barrier filter, a PMT, or the like. The fluorescence detection unit 211 receives, by the image forming lens 210, the observation light with which an image is formed on a light reception surface of the fluorescence detection unit 211 and outputs an electronic signal depending on an amount of the light. The fluorescence detection unit 211 detects the observation light over the observation surface of the sample S, in conformity with the ultrashort pulse light scanning on the observation surface of the sample S.

The observation light emitted from the sample S in a direction opposite to the objective lens 206 is reflected on a dichroic mirror 212, and enters a fluorescence detection unit 213. The fluorescence detection unit 113 includes, for example, a barrier filter, a PMT, or the like. The fluorescence detection unit 113 receives the observation light reflected on the dichroic mirror 212 and outputs an electronic signal depending on an amount of the light. The fluorescence detection unit 213 detects the observation light over the observation surface of the sample S, in conformity with the ultrashort pulse light scanning on the observation surface of the sample S.

The electronic signals output from the fluorescence detection units 207, 211, and 213 are input to, for example, a computer (not illustrated). The computer is capable of generating an observation image, displaying the generated observation image, and storing data on the observation image, based on the input electronic signals.

<Cemented Lens>

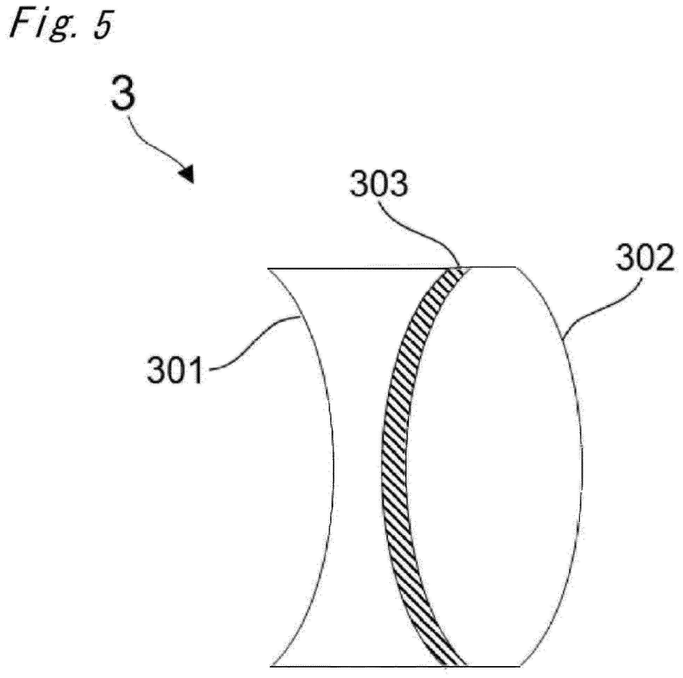

FIG. 5 is a schematic view illustrating one example of a cemented lens according to the present embodiment. A cemented lens 3 is a compound lens including a first lens element 301 and a second lens element 302. As at least one of the first lens element and the second lens element, the optical glass according to the present embodiment is used. The first lens element and the second lens element are bonded to each other interposing therebetween a bonding member 303. A publicly-known adhesion or the like may be used as the bonding member 303. Note that, the "lens element" means each lens forming a single lens or a cemented lens.

From a viewpoint of chromatic aberration correction, the cemented lens according to the present embodiment is advantageous, and can be used suitably as the optical element, the optical system, and the optical device that are described above, and the like. The optical system including the cemented lens can be suitably used particularly as the interchangeable camera lens, the optical device, and the like. Note that, in the aspect described above, description is made on the cemented lens using the two lens elements, but the aspect is not limited thereto. The cemented lens may include three or more lens elements. When the cemented lens includes three or more lens elements, it is sufficient that at least one of the three or more lens elements be formed by using the optical glass according to the present embodiment.

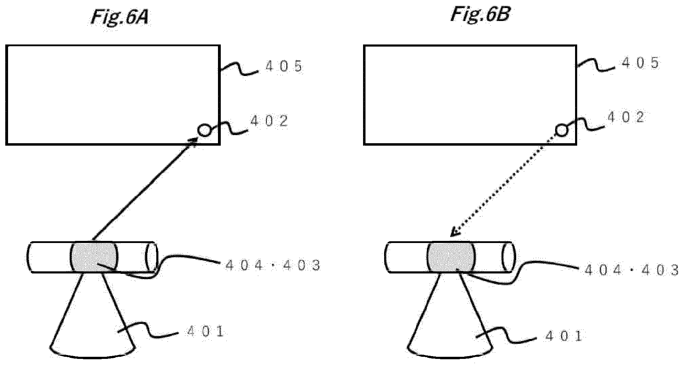

As illustrated in FIG. 6A, the glass according to the present embodiment may also be used as a reflective element (retroreflector) 402 of a position measuring device 401 such as a laser tracker. In the position measuring device 401, an irradiation unit 403 that projects light onto the reflective element 402 and a light reception unit 404 that receives light reflected on the reflector are integrated with each other. The reflective element 402 can be attached to a part of a workpiece (measurement target object) 405 such as robot arms, machining equipment, and an airplane fuselage. The freely-selected number of reflective elements may be attached to the workpiece. The reflective element 402 may have a shape obtained by bonding hemispherical glass according to the present embodiment and hemispherical glass different from that of the present embodiment with each other, and is preferably cat's eye glass (spherical glass).

Next, with reference to FIG. 6A and FIG. 6B, description is made on an operation of the position measuring device 401. First, as illustrated in FIG. 6A, the position measuring device 401 orients the irradiation unit 403 in a direction toward the reflective element 402 provided to the workpiece 405, and emits measurement light. Subsequently, as illustrated in FIG. 6B, the light reception unit 404 receives the light reflected on the reflective element 402. The position measuring device 401 measures a distance to the reflective element 402, based on a time from timing at which the reflective element is irradiated with the light to timing at which the reflection light is received, and decides a three-dimensional position of the reflective element 402, based on the measured distance and the direction of the irradiation with the measurement light (an elevation angle and an azimuth angle). As a distance measurement method, there may be adopted a method of causing reference light being a reference and measurement light having been reflected on the reflective element 402 and returned to interfere with each other and obtaining a distance, based on a phase difference of the two types of light. Examples

Next, Examples of the present invention and Comparative Example are described. Note that the present invention is not limited thereto.

<Production of Optical Glasses>

The optical glasses in Examples and Comparative Example were produced by the following procedures. First, glass raw materials selected from oxides, hydroxides, phosphate compounds (phosphates, orthophosphoric acids, and the like), carbonates, nitrates, and the like were weighed so as to obtain the compositions (mass%) illustrated in each table. Next, the weighed raw materials were mixed and put in a platinum crucible, melted at a temperature of from 750 to 1100 degrees Celsius, and uniformed by stirring. After defoaming, the resultant was lowered to an appropriate temperature, poured in a mold, annealed, and molded. In this manner, each sample was obtained.

<Physical Property Evaluation>

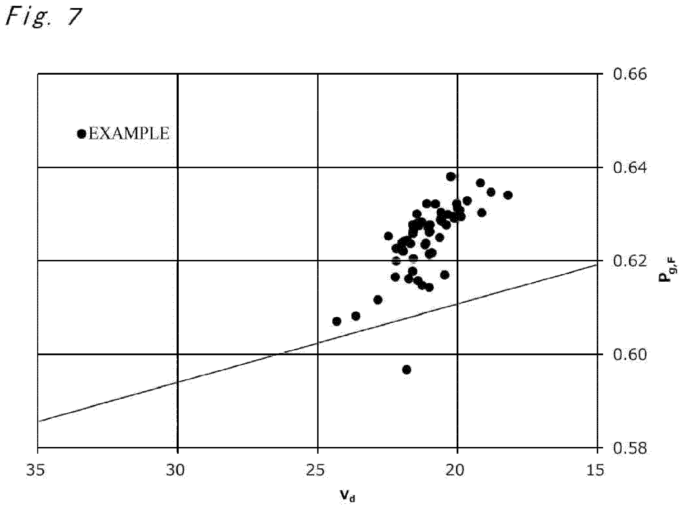

FIG. 7 is a graph in which $P_{g, F}$ and $\nu_d$ in each of Examples and Comparative Example are plotted.

Refractive Index ($n_d$) and Abbe Number ($v_d$)

The refractive index ($n_d$) and the abbe number ($v_d$) in each of the samples were measured and calculated through use of a refractive index measuring instrument (KPR-2000 manufactured by Shimadzu Device Corporation). $n_d$ indicates a refractive index of the glass with respect to light having a wavelength of 587.562 nm. $v_d$ was obtained based on Expression (2) given below. $n_C$ and $n_F$ indicate refractive indexes of the glass with respect to light having wavelengths of 656.273 nm and 486.133 nm, respectively.

$$v_d = (n_d - 1)/(n_F - n_C) \quad \cdots \quad (2)$$

Partial Dispersion Ratio ($P_{g,F}$)

The partial dispersion ratio ($P_{g,F}$) in each of the samples indicates a ratio of partial dispersion ($n_g - n_F$) to main dispersion ($n_F - n_C$), and was obtained based on Expression (3) given below. $n_g$ indicates a refractive index of the glass with respect to light having a wavelength of 435.835 nm. The value of the partial dispersion ratio ($P_{g,F}$) was rounded to the third decimal place.

$$P_{g,F} = (n_g - n_F)/(n_F - n_C) \quad \cdots \quad (3)$$

Abnormal Dispersibility ($\Delta P_{g,F}$)

Abnormal dispersibility ($\Delta P_{g,F}$) in each of the samples indicates deviation from the partial dispersion ratio standard line based on the two types of glass F2 and K7 having normal dispersibilities. In other words, on a coordinate system in which the vertical axis indicates the partial dispersion ratio ($P_{g,F}$) and the horizontal axis indicates the abbe number $v_d$, a difference in the vertical coordinate between a linear line connecting two difference types of glass and a value of the glass being a comparison target indicates deviation of the partial dispersion ratio, in other words, abnormal dispersibility ($\Delta P_{g,F}$). In the coordinate system described above, when the value of the partial dispersion ratio of the glass is positioned upper than the linear line connecting the types of reference glass, it indicates positive abnormal dispersibility ($+\Delta P_{g,F}$). When the value of the glass is positioned lower than the linear line, it indicates negative abnormal dispersibility ($-\Delta P_{g,F}$). Note that, the abbe number $v_d$ and the partial dispersion ratio ($P_{g,F}$) of F2 and K7 are as follows.

F2: the abbe number $v_d$ = 36.33, the partial dispersion ratio ($P_{g,F}$) = 0.5834
K7: the abbe number $v_d$ = 60.47, the partial dispersion ratio ($P_{g,F}$) = 0.5429

$$\Delta P_{g,F} = P_{g,F} - (-0.0016777 \times v_d + 0.6443513) \quad \cdots \quad (4)$$

Each table indicates compositions and physical properties in each example. Note that, a content rate of each component is expressed with mol% unless otherwise stated. In the expression, "$\Sigma A_2O$" represents a total content rate of $Li_2O$, $Na_2O$, and $K_2O$ (A = Li, Na, K). In the expression, "$\Sigma EO$" represents a total content rate of SrO, BaO, CaO, MgO, and ZnO (E = Sr, Ba, Ca, Mg, Zn). In the expression, "$\Sigma Ln_2O_3$" represents a total content rate of $Y_2O_3$, $La_2O_3$, and $Gd_2O_3$ (Ln = Y, La, Gd). In Comparative Example, optical glass was not obtained, and hence the physical properties thereof were "unmeasurable".

[Table 1]

| COMPONENTS | EXAMPLE 1 | EXAMPLE 2 | EXAMPLE 3 | EXAMPLE 4 | EXAMPLE 5 |
|---|---|---|---|---|---|
| $TeO_2$ | 63.90 | 65.90 | 65.90 | 62.50 | 76.50 |
| $Bi_2O_3$ | 3.92 | 1.92 | 2.92 | 1.22 | 1.22 |
| ZnO | 17.53 | 17.53 | 15.53 | 29.43 | 15.43 |
| $B_2O_3$ | 4.48 | 4.48 | 4.48 | 3.98 | 3.98 |
| $Li_2O$ | 0.00 | | | | |
| $Na_2O$ | 0.00 | | | | |
| $K_2O$ | 0.00 | | | | |
| MgO | 0.00 | | | | |

(continued)

| COMPONENTS | EXAMPLE 1 | EXAMPLE 2 | EXAMPLE 3 | EXAMPLE 4 | EXAMPLE 5 |
|---|---|---|---|---|---|
| CaO | 0.00 | | | | |
| SrO | 0.00 | | | | |
| BaO | 0.00 | | | | |
| $Al_2O_3$ | 0.00 | | | | |
| $Y_2O_3$ | 6.60 | 6.60 | 6.60 | 0.00 | |
| $La_2O_3$ | 0.00 | | | | |
| $Gd_2O_3$ | 0.00 | | | | |
| $TiO_2$ | 0.00 | | | | |
| $ZrO_2$ | 0.00 | | | | |
| $Nb_2O_5$ | 0.00 | | | | |
| $Ta_2O_5$ | 0.00 | | | | |
| $WO_3$ | 3.57 | 3.57 | 4.57 | 2.87 | 2.87 |
| $Sb_2O_3$ | 0.00 | | | | |
| total | 100.00 | 100.00 | 100.00 | 100.00 | 100.00 |
| $n_d$ | 2.05394 | 2.04049 | 2.05426 | 2.05191 | 2.10543 |
| $n_c$ | 2.03945 | 2.02654 | 2.03981 | 2.03729 | 2.08887 |
| $n_F$ | 2.09062 | 2.07570 | 2.09095 | 2.08887 | 2.14766 |
| $n_g$ | 2.12288 | 2.10635 | 2.12310 | 2.12124 | 2.18498 |
| $n_{1550}$ | 1.99203 | 1.98042 | 1.99233 | 1.98934 | 2.03508 |
| $V_d$ | 20.60 | 21.16 | 20.62 | 20.40 | 18.80 |
| $P_{g,F}$ | 0.630 | 0.623 | 0.629 | 0.628 | 0.635 |
| $\triangle P_{g,F}$ | 0.021 | 0.015 | 0.019 | 0.018 | 0.022 |
| $\Sigma A_2O$ | 0.00 | 0.00 | 0.00 | 0.00 | 0.00 |
| $\Sigma EO$ | 17.53 | 17.53 | 15.53 | 29.43 | 15.43 |
| $\Sigma Ln_2O_3$ | 6.60 | 6.60 | 6.60 | 0.00 | 0.00 |
| (Bi+B+Y+La+ Gd)/Te | 0.23 | 0.20 | 0.21 | 0.08 | 0.07 |

[Table 2]

| COMPONENTS | EXAMPLE 6 | EXAMPLE 7 | EXAMPLE 8 | EXAMPLE 9 | EXAMPLE 10 |
|---|---|---|---|---|---|
| $TeO_2$ | 80. 59 | 84. 57 | 65. 90 | 64.90 | 65. 90 |
| $Bi_2O_3$ | 0.00 | | 2. 92 | 2. 92 | 1. 92 |
| ZnO | 15. 43 | 15. 43 | 15. 53 | 15. 53 | 17. 53 |
| $B_2O_3$ | 3.98 | 0.00 | 4.48 | 4. 48 | 4.48 |
| $Li_2O$ | | | 4. 90 | | |
| $Na_2O$ | | | | 4. 90 | |
| $K_2O$ | | | | | |
| MgO | | | | | 5. 00 |
| CaO | | | | | |
| SrO | | | | | |

(continued)

| COMPONENTS | EXAMPLE 6 | EXAMPLE 7 | EXAMPLE 8 | EXAMPLE 9 | EXAMPLE 10 |
|---|---|---|---|---|---|
| BaO | | | | | |
| $Al_2O_3$ | | | | | |
| $Y_2O_3$ | | | 1. 70 | 2. 70 | 1. 60 |
| $La_2O_3$ | | | | | |
| $Gd_2O_3$ | | | | | |
| $TiO_2$ | | | | | |
| $ZrO_2$ | | | | | |
| $Nb_2O_5$ | | | | | |
| $Ta_2O_5$ | | | | | |
| $WO_3$ | 0. 00 | 0. 00 | 4. 57 | 4. 57 | 3. 57 |
| $Sb_2O_3$ | | | | | |
| total | 100.00 | 100.00 | 100.00 | 100. 00 | 100. 00 |
| $n_d$ | 2.09943 | 2. 13321 | 2.06539 | 2.03922 | 2.05708 |
| $n_c$ | 2.08316 | 2. 11569 | 2.05010 | 2. 02456 | 2.04226 |
| $n_F$ | 2. 14062 | 2.17798 | 2. 10432 | 2. 07685 | 2.09480 |
| $n_g$ | 2.17683 | 2.21747 | 2. 13863 | 2. 10976 | 2. 12786 |
| $n_{1550}$ | 2.03038 | 2.05655 | 2. 00015 | 1.97608 | 1.99341 |
| $V_d$ | 19. 14 | 18. 19 | 19.65 | 19. 88 | 20.12 |
| $P_{g, F}$ | 0. 630 | 0.634 | 0.633 | 0. 629 | 0. 629 |
| $\triangle P_{g,F}$ | 0.018 | 0. 020 | 0.021 | 0.018 | 0. 019 |
| $\Sigma A_2O$ | 0. 00 | 0. 00 | 4. 90 | 4. 90 | 0. 00 |
| $\Sigma EO$ | 15.43 | 15. 43 | 15. 53 | 15. 53 | 22. 53 |
| $\Sigma Ln_2O_3$ | 0. 00 | 0. 00 | 1. 70 | 2. 70 | 1.60 |
| (Bi+B+Y+La +Gd) /Te | 0. 05 | 0. 00 | 0. 14 | 0. 16 | 0. 12 |

[Table 3]

| COMPONENTS | EXAMPLE 11 | EXAMPLE 12 | EXAMPLE 13 | EXAMPLE 14 | EXAMPLE 15 |
|---|---|---|---|---|---|
| $TeO_2$ | 65. 90 | 65. 90 | 65. 90 | 60. 57 | 63. 90 |
| $Bi_2O_3$ | 1. 92 | 1. 92 | 1. 92 | | 3. 92 |
| ZnO | 17. 53 | 17. 53 | 17. 53 | 39. 43 | 20. 23 |
| $B_2O_3$ | 4.48 | 4.48 | 4.48 | | 4.48 |
| $Li_2O$ | | | | | |
| $Na_2O$ | | | | | |
| $K_2O$ | | | | | |
| MgO | | | | | |
| CaO | 6. 00 | | | | |
| SrO | | 0.96 | | | |
| BaO | | | 0. 96 | | |
| $Al_2O_3$ | | | | | |

(continued)

| COMPONENTS | EXAMPLE 11 | EXAMPLE 12 | EXAMPLE 13 | EXAMPLE 14 | EXAMPLE 15 |
|---|---|---|---|---|---|
| $Y_2O_3$ | 0.60 | 5.64 | 5.64 | | 3.90 |
| $La_2O_3$ | | | | | |
| $Gd_2O_3$ | | | | | |
| $TiO_2$ | | | | | |
| $ZrO_2$ | | | | | |
| $Nb_2O_5$ | | | | | |
| $Ta_2O_5$ | | | | | |
| $WO_3$ | 3.57 | 3.57 | 3.57 | 0.00 | 3.57 |
| $Sb_2O_3$ | | | | | |
| total | 100.00 | 100.00 | 100.00 | 100.00 | 100.00 |
| $n_d$ | 2.05838 | 2.04435 | 2.04051 | 2.03059 | 2.06437 |
| $n_c$ | 2.04338 | 2.03023 | 2.02644 | 2.01690 | 2.04934 |
| $n_F$ | 2.09651 | 2.07993 | 2.07602 | 2.06536 | 2.10249 |
| $n_g$ | 2.13003 | 2.11105 | 2.10708 | 2.09515 | 2.13610 |
| $n_{1550}$ | 1.99418 | 1.97918 | 1.98000 | 1.97170 | 1.99831 |
| $V_d$ | 19.92 | 21.01 | 20.98 | 21.27 | 20.02 |
| $P_{g,F}$ | 0.631 | 0.626 | 0.626 | 0.615 | 0.632 |
| $\triangle P_{g,F}$ | 0.020 | 0.017 | 0.017 | 0.006 | 0.022 |
| $\Sigma A_2O$ | 0.00 | 0.00 | 0.00 | 0.00 | 0.00 |
| $\Sigma EO$ | 23.53 | 18.49 | 18.49 | 39.43 | 20.23 |
| $\Sigma Ln_2O_3$ | 0.60 | 5.64 | 5.64 | 0.00 | 3.90 |
| $(Bi+B+Y+La+Gd)/Te$ | 0.11 | 0.18 | 0.18 | 0.00 | 0.19 |

[Table 4]

| COMPONENTS | EXAMPLE 16 | EXAMPLE 17 | EXAMPLE 18 | EXAMPLE 19 | EXAMPLE 20 |
|---|---|---|---|---|---|
| $TeO_2$ | 63.90 | 60.90 | 63.90 | 62.20 | 60.20 |
| $Bi_2O_3$ | 3.92 | 3.92 | 3.92 | 3.92 | 3.92 |
| ZnO | 20.23 | 20.23 | 15.23 | 15.23 | 15.23 |
| $B_2O_3$ | 4.48 | 4.48 | 4.48 | 4.48 | 4.48 |
| $Li_2O$ | | | | | |
| $Na_2O$ | | | | | |
| $K_2O$ | | | | | |
| MgO | | | | | |
| CaO | | | | | |
| SrO | | | | | |
| BaO | | | | | |
| $Al_2O_3$ | | | | | |
| $Y_2O_3$ | | 3.90 | | | |
| $La_2O_3$ | 3.90 | 3.00 | 8.90 | 10.60 | 10.60 |

(continued)

| COMPONENTS | EXAMPLE 16 | EXAMPLE 17 | EXAMPLE 18 | EXAMPLE 19 | EXAMPLE 20 |
|---|---|---|---|---|---|
| $Gd_2O_3$ | | | | | |
| $TiO_2$ | | | | | |
| $ZrO_2$ | | | | | |
| $Nb_2O_5$ | | | | | |
| $Ta_2O_5$ | | | | | |
| $WO_3$ | 3. 57 | 3. 57 | 3. 57 | 3. 57 | 5. 57 |
| $Sb_2O_3$ | | | | | |
| total | 100.00 | 100.00 | 100.00 | 100.00 | 100.00 |
| $n_d$ | 2.07096 | 2.04495 | 2. 05464 | 2. 04356 | 2.04629 |
| $n_c$ | 2.05585 | 2.03087 | 2.04110 | 2. 02987 | 2.03255 |
| $n_F$ | 2. 10940 | 2.08067 | 2.09129 | 2.07823 | 2.08103 |
| $n_g$ | 2. 14321 | 2. 11193 | 2.12213 | 2. 10823 | 2. 11140 |
| $n_{1550}$ | 2.00669 | 1.98451 | 1.99402 | 1. 98465 | 1. 98726 |
| $V_d$ | 20. 00 | 20. 98 | 21. 01 | 21. 58 | 21. 58 |
| $P_{g,F}$ | 0. 631 | 0. 628 | 0.614 | 0. 620 | 0. 626 |
| $\triangle P_{g,F}$ | 0.021 | 0. 019 | 0. 005 | 0. 012 | 0.018 |
| $\Sigma A_2O$ | 0. 00 | 0.00 | 0. 00 | 0.00 | 0. 00 |
| $\Sigma EO$ | 20. 23 | 20. 23 | 15. 23 | 15. 23 | 15. 23 |
| $\Sigma Ln_2O_3$ | 3.90 | 6. 90 | 8. 90 | 10. 60 | 10.60 |
| $(Bi+B+Y+La +Gd)/Te$ | 0. 19 | 0. 25 | 0. 27 | 0.31 | 0. 32 |

[Table 5]

| COMPONENTS | EXAMPLE 21 | EXAMPLE 22 | EXAMPLE 23 | EXAMPLE 24 | EXAMPLE 25 |
|---|---|---|---|---|---|
| $TeO_2$ | 63.90 | 60.09 | 63.20 | 63.20 | 65.90 |
| $Bi_2O_3$ | 3.92 | 3.56 | 2.92 | 2.92 | 2.92 |
| $ZnO$ | 15.23 | 27.48 | 15.23 | 15.23 | 15.53 |
| $B_2O_3$ | 4.48 | 2.08 | 4.48 | 4.48 | 4.48 |
| $Li_2O$ | | | | | |
| $Na_2O$ | | | | | |
| $K_2O$ | | | | | |
| $MgO$ | | | | | |
| $CaO$ | | | | | |
| $SrO$ | | | | | |
| $BaO$ | | | | | |
| $Al_2O_3$ | | | | | 3.00 |
| $Y_2O_3$ | 3.90 | 3.55 | | 10.60 | 3.60 |
| $La_2O_3$ | 5.00 | | | | |
| $Gd_2O_3$ | | | 10.60 | | |
| $TiO_2$ | | | | | |

(continued)

| COMPONENTS | EXAMPLE 21 | EXAMPLE 22 | EXAMPLE 23 | EXAMPLE 24 | EXAMPLE 25 |
|---|---|---|---|---|---|
| $ZrO_2$ | | | | | |
| $Nb_2O_5$ | | | | | |
| $Ta_2O_5$ | | | | | |
| $WO_3$ | 3.57 | 3.25 | 3.57 | 3.57 | 4.57 |
| $Sb_2O_3$ | | | | | |
| total | 100.00 | 100.00 | 100.00 | 100.00 | 100.00 |
| $n_d$ | 2.04924 | 2.05512 | 2.03930 | 2.02294 | 2.04122 |
| $n_c$ | 2.03510 | 2.04047 | 2.02657 | 2.00973 | 2.02703 |
| $n_F$ | 2.08496 | 2.09234 | 2.07420 | 2.05635 | 2.07748 |
| $n_g$ | 2.11622 | 2.12502 | 2.10263 | 2.08535 | 2.10901 |
| $n_{1550}$ | 1.98877 | 1.99269 | 1.98099 | 1.96562 | 1.97971 |
| $V_d$ | 21.05 | 20.34 | 21.82 | 21.94 | 20.64 |
| $P_{g,F}$ | 0.627 | 0.630 | 0.597 | 0.622 | 0.625 |
| $\triangle P_{g,F}$ | 0.018 | 0.020 | -0.011 | 0.015 | 0.015 |
| $\Sigma A_2O$ | 0.00 | 0.00 | 0.00 | 0.00 | 0.00 |
| $\Sigma EO$ | 15.23 | 27.48 | 15.23 | 15.23 | 15.53 |
| $\Sigma Ln_2O_3$ | 8.90 | 3.55 | 10.60 | 10.60 | 3.60 |
| (Bi+B+Y+La+Gd)/Te | 0.27 | 0.15 | 0.28 | 0.28 | 0.17 |

[Table 6]

| COMPONENTS | EXAMPLE 26 | EXAMPLE 27 | EXAMPLE 28 | EXAMPLE 29 | EXAMPLE 30 |
|---|---|---|---|---|---|
| $TeO_2$ | 65.90 | 65.90 | 65.90 | 63.26 | 63.26 |
| $Bi_2O_3$ | 2.92 | 2.92 | 2.92 | 3.87 | 3.87 |
| $ZnO$ | 15.53 | 15.53 | 15.53 | 15.74 | 15.74 |
| $B_2O_3$ | 4.48 | 4.48 | 4.48 | 4.89 | 4.89 |
| $Li_2O$ | | | | | |
| $Na_2O$ | | | | | |
| $K_2O$ | | | | | |
| $MgO$ | | | | | |
| $CaO$ | | | | | |
| $SrO$ | | | | | |
| $BaO$ | | | | | |
| $Al_2O_3$ | | | | | |
| $Y_2O_3$ | 3.60 | 3.60 | 6.60 | 1.42 | 1.42 |
| $La_2O_3$ | | | | 4.12 | 6.12 |
| $Gd_2O_3$ | | | | | |
| $TiO_2$ | 3.00 | | | | |
| $ZrO_2$ | | 3.00 | | 1.20 | 1.20 |
| $Nb_2O_5$ | | | 1.00 | 4.00 | 2.00 |

(continued)

| COMPONENTS | EXAMPLE 26 | EXAMPLE 27 | EXAMPLE 28 | EXAMPLE 29 | EXAMPLE 30 |
|---|---|---|---|---|---|
| $Ta_2O_5$ | | | | 1. 50 | 1. 50 |
| $WO_3$ | 4. 57 | 4. 57 | 3. 57 | | |
| $Sb_2O_3$ | | | | | |
| total | 100.00 | 100. 00 | 100.00 | 100. 00 | 100.00 |
| $n_d$ | 2.08354 | 2. 06703 | 2. 05569 | 2.07988 | 2.06183 |
| $n_c$ | 2.06781 | 2.05210 | 2.04121 | 2.06482 | 2.04750 |
| $n_F$ | 2. 12431 | 2. 10506 | 2.09258 | 2. 11840 | 2.09825 |
| $n_g$ | 2. 16028 | 2. 13841 | 2. 12486 | 2. 15212 | 2. 12980 |
| $n_{1550}$ | 2.01603 | 2.00292 | 1.99330 | 2. 01488 | 1. 99994 |
| $V_d$ | 19. 18 | 20. 14 | 20. 55 | 20. 15 | 20.92 |
| $P_{g, F}$ | 0. 637 | 0. 630 | 0. 628 | 0. 629 | 0. 622 |
| $\triangle P_{g,F}$ | 0. 025 | 0. 019 | 0. 019 | 0. 019 | 0.012 |
| $\Sigma A_2O$ | 0. 00 | 0. 00 | 0. 00 | 0. 00 | 0. 00 |
| $\Sigma EO$ | 15. 53 | 15. 53 | 15. 53 | 15. 74 | 15. 74 |
| $\Sigma Ln_2O_3$ | 3. 60 | 3. 60 | 6.60 | 5. 54 | 7. 54 |
| (Bi+B+Y+La +Gd) /Te | 0. 17 | 0. 17 | 0. 21 | 0. 23 | 0. 26 |

[Table 7]

| COMPONENTS | EXAMPLE 31 | EXAMPLE 32 | EXAMPLE 33 | EXAMPLE 34 | EXAMPLE 35 |
|---|---|---|---|---|---|
| $TeO_2$ | 63. 26 | 63. 26 | 64. 20 | 64. 20 | 66. 20 |
| $Bi_2O_3$ | 3.87 | 3.87 | 1. 92 | 3. 92 | 1. 92 |
| $ZnO$ | 15. 74 | 15. 74 | 15. 23 | 15. 23 | 15. 23 |
| $B_2O_3$ | 4. 89 | 4. 89 | 4. 48 | 4. 48 | 4. 48 |
| $Li_2O$ | | | | | |
| $Na_2O$ | | | | | |
| $K_2O$ | | | | | |
| $MgO$ | | | | | |
| $CaO$ | | | | | |
| $SrO$ | | | | | |
| $BaO$ | | | | | |
| $Al_2O_3$ | | | | | |
| $Y_2O_3$ | 1. 42 | 1. 42 | | | |
| $La_2O_3$ | 8.12 | 6.32 | 10.60 | 10. 60 | 10. 60 |
| $Gd_2O_3$ | | | | | |
| $TiO_2$ | | | | | |
| $ZrO_2$ | 1. 20 | 1. 20 | | | |
| $Nb_2O_5$ | | 1. 80 | | | |
| $Ta_2O_5$ | 1. 50 | 1. 50 | | | |
| $WO_3$ | | | 3. 57 | 1. 57 | 1. 57 |

(continued)

| COMPONENTS | EXAMPLE 31 | EXAMPLE 32 | EXAMPLE 33 | EXAMPLE 34 | EXAMPLE 35 |
|---|---|---|---|---|---|
| $Sb_2O_3$ | | | | | |
| total | 100.00 | 100.00 | 100.00 | 100. 00 | 100.00 |
| $n_d$ | 2.04317 | 2.06115 | 2.03320 | 2.04586 | 2.03037 |
| $n_c$ | 2.02952 | 2.04686 | 2.02024 | 2.03219 | 2.01720 |
| $n_F$ | 2.07764 | 2.09737 | 2.06674 | 2.08103 | 2.06364 |
| $n_g$ | 2.10764 | 2.12875 | 2.09541 | 2.11111 | 2.09243 |
| $n_{1550}$ | 1.98425 | 1.99947 | 1.97614 | 1.98648 | 1.97326 |
| $V_d$ | 21.68 | 21.01 | 22.22 | 21.41 | 22.19 |
| $P_{g, F}$ | 0.624 | 0.621 | 0.617 | 0.616 | 0.620 |
| $\triangle P_{g, F}$ | 0.016 | 0.012 | 0.009 | 0.007 | 0.013 |
| $\Sigma A_2O$ | 0.00 | 0.00 | 0.00 | 0.00 | 0.00 |
| $\Sigma EO$ | 15.74 | 15.74 | 15.23 | 15.23 | 15.23 |
| $\Sigma Ln_2O_3$ | 9.54 | 7.74 | 10.60 | 10.60 | 10.60 |
| (Bi+B+Y+La +Gd)/Te | 0.29 | 0.26 | 0.26 | 0.30 | 0.26 |

[Table 8]

| COMPONENTS | EXAMPLE 36 | EXAMPLE 37 | EXAMPLE 38 | EXAMPLE 39 | EXAMPLE 40 |
|---|---|---|---|---|---|
| $TeO_2$ | 66.20 | 69.68 | 69.68 | 69.68 | 64.68 |
| $Bi_2O_3$ | 1.92 | | | | |
| $ZnO$ | 20.23 | 15.23 | 20.23 | 25.83 | 20.23 |
| $B_2O_3$ | 4.48 | 4.48 | 4.48 | 4.48 | 4.48 |
| $Li_2O$ | | | | | |
| $Na_2O$ | | | | | |
| $K_2O$ | | | | | |
| $MgO$ | | | | | |
| $CaO$ | | | | | |
| $SrO$ | | | | | |
| $BaO$ | | | | | |
| $Al_2O_3$ | | | | | |
| $Y_2O_3$ | | | | | |
| $La_2O_3$ | 5.60 | 10.60 | 5.60 | | 10.60 |
| $Gd_2O_3$ | | | | | |
| $TiO_2$ | | | | | |
| $ZrO_2$ | | | | | |
| $Nb_2O_5$ | | | | | |
| $Ta_2O_5$ | | | | | |
| $WO_3$ | 1.57 | | | | |
| $Sb_2O_3$ | | | | | |
| total | 100.00 | 100.00 | 100.00 | 100.00 | 100.00 |

(continued)

| COMPONENTS | EXAMPLE 36 | EXAMPLE 37 | EXAMPLE 38 | EXAMPLE 39 | EXAMPLE 40 |
|---|---|---|---|---|---|
| $n_d$ | 2.04507 | 2.01676 | 2.03087 | 2.05034 | 1.99833 |
| $n_c$ | 2.03107 | 2.00416 | 2.01746 | 2.03588 | 1.98633 |
| $n_F$ | 2.08052 | 2.04867 | 2.06487 | 2.08721 | 2.02856 |
| $n_g$ | 2.11137 | 2.07589 | 2.09408 | 2.11889 | 2.05425 |
| $n_{1550}$ | 1.98477 | 1.96130 | 1.97245 | 1.98767 | 1.94552 |
| $V_d$ | 21.13 | 22.85 | 21.74 | 20.46 | 23.64 |
| $P_{g, F}$ | 0.624 | 0.612 | 0.616 | 0.617 | 0.608 |
| $\triangle P_{g, F}$ | 0.015 | 0.006 | 0.008 | 0.007 | 0.004 |
| $\Sigma A_2O$ | 0.00 | 0.00 | 0.00 | 0.00 | 0.00 |
| $\Sigma EO$ | 20.23 | 15.23 | 20.23 | 25.83 | 20.23 |
| $\Sigma Ln_2O_3$ | 5.60 | 10.60 | 5.60 | 0.00 | 10.60 |
| (Bi+B+Y+La +Gd)/Te | 0.18 | 0.22 | 0.14 | 0.06 | 0.23 |

[Table 9]

| COMPONENTS | EXAMPLE 41 | EXAMPLE 42 | EXAMPLE 43 | EXAMPLE 44 | EXAMPLE 45 |
|---|---|---|---|---|---|
| $TeO_2$ | 60. 68 | 62. 90 | 55. 26 | 57. 90 | 55. 26 |
| $Bi_2O_3$ | | 1. 92 | 3. 87 | 2. 92 | 4. 87 |
| ZnO | 24. 23 | 15. 23 | 15. 74 | 15. 53 | 14. 74 |
| $B_2O_3$ | 4. 48 | 4. 48 | 4. 89 | 4. 48 | 4. 89 |
| $Li_2O$ | | | | | |
| $Na_2O$ | | | | | |
| $K_2O$ | | | | | |
| MgO | | | | | |
| CaO | | | | | |
| SrO | | | | | |
| BaO | | | | | |
| $Al_2O_3$ | | | | | |
| $Y_2O_3$ | | | 1. 42 | 3. 60 | 1. 42 |
| $La_2O_3$ | 10. 60 | 8. 90 | 8. 12 | 4. 00 | 8. 12 |
| $Gd_2O_3$ | | | | | |
| $TiO_2$ | | | | | |
| $ZrO_2$ | | | 1. 20 | 3.00 | 1. 20 |
| $Nb_2O_5$ | | | 4. 00 | | 4.00 |
| $Ta_2O_5$ | | | 1. 50 | | |
| $WO_3$ | | 6. 57 | 4. 00 | 8. 57 | 5. 50 |
| $Sb_2O_3$ | | | | | |
| total | 100.00 | 100.00 | 100. 00 | 100.00 | 100.00 |
| $n_d$ | 1.98402 | 2.04921 | 2.07119 | 2.05188 | 2.07683 |
| $n_c$ | 1.97248 | 2.03578 | 2.05690 | 2.03791 | 2.06217 |

(continued)

| COMPONENTS | EXAMPLE 41 | EXAMPLE 42 | EXAMPLE 43 | EXAMPLE 44 | EXAMPLE 45 |
|---|---|---|---|---|---|
| $n_F$ | 2.01293 | 2.08433 | 2.10724 | 2.08710 | 2.11396 |
| $n_g$ | 2.03748 | 2.11432 | 2.13887 | 2.11797 | 2.14671 |
| $n_{1550}$ | 1.93310 | 1.98979 | 2.01432 | 1.99175 | 2.01402 |
| $V_d$ | 24.33 | 21.61 | 21.28 | 21.38 | 20.79 |
| $P_{g, F}$ | 0.607 | 0.618 | 0.628 | 0.628 | 0.632 |
| $\triangle P_{g, F}$ | 0.004 | 0.010 | 0.020 | 0.019 | 0.023 |
| $\Sigma A_2O$ | 0.00 | 0.00 | 0.00 | 0.00 | 0.00 |
| $\Sigma EO$ | 24.23 | 15.23 | 15.74 | 15.53 | 14.74 |
| $\Sigma Ln_2O_3$ | 10.60 | 8.90 | 9.54 | 7.60 | 9.54 |
| $(Bi+B+Y+La+Gd)/Te$ | 0.25 | 0.24 | 0.33 | 0.26 | 0.35 |

[Table 10]

| COMPONENTS | EXAMPLE 46 | EXAMPLE 47 | EXAMPLE 48 | EXAMPLE 49 | EXAMPLE 50 |
|---|---|---|---|---|---|
| $TeO_2$ | 55. 26 | 56. 58 | 55. 90 | 55. 90 | 55. 90 |
| $Bi_2O_3$ | 0.87 | 2. 89 | 2. 92 | 2. 92 | 2. 92 |
| $ZnO$ | 14. 74 | 15. 14 | 15. 53 | 15. 53 | 15. 53 |
| $B_2O_3$ | 4. 89 | 4.69 | 4. 48 | 4. 48 | 4. 48 |
| $Li_2O$ | | | | | |
| $Na_2O$ | | | | | |
| $K_2O$ | | | | | |
| $MgO$ | | | | | |
| $CaO$ | | | | | |
| $SrO$ | | | | | |
| $BaO$ | | | | | |
| $Al_2O_3$ | | | | | |
| $Y_2O_3$ | 1. 42 | 2.51 | 3. 60 | 2. 60 | 1. 60 |
| $La_2O_3$ | 8. 12 | 6. 06 | 4. 00 | 5. 00 | 6. 00 |
| $Gd_2O_3$ | | | | | |
| $TiO_2$ | | | | | |
| $ZrO_2$ | 1. 20 | 2.10 | 3. 00 | 3. 00 | 3. 00 |
| $Nb_2O_5$ | 4. 00 | 2. 00 | | | |
| $Ta_2O_5$ | | | | | |
| $WO_3$ | 9. 50 | 8. 04 | 10. 57 | 10. 57 | 10. 57 |
| $Sb_2O_3$ | | | | | |
| total | 100.00 | 100.00 | 100.00 | 100.00 | 100.00 |
| $n_d$ | 2.05422 | 2.05871 | 2.05442 | 2.05624 | 2.05770 |
| $n_c$ | 2.04053 | 2.04465 | 2.04041 | 2.04220 | 2.04365 |
| $n_F$ | 2.08865 | 2.09419 | 2.08978 | 2.09169 | 2.09319 |
| $n_g$ | 2.11869 | 2.12529 | 2.12080 | 2.12278 | 2.12431 |

(continued)

| COMPONENTS | EXAMPLE 46 | EXAMPLE 47 | EXAMPLE 48 | EXAMPLE 49 | EXAMPLE 50 |
|---|---|---|---|---|---|
| $n_{1550}$ | 1.99473 | 1.99808 | 1.99404 | 1.99577 | 1.99721 |
| $V_d$ | 21.91 | 21.37 | 21.36 | 21.34 | 21.35 |
| $P_{g, F}$ | 0.624 | 0.628 | 0.628 | 0.628 | 0.628 |
| $\triangle P_{g, F}$ | 0.017 | 0.019 | 0.020 | 0.020 | 0.020 |
| $\Sigma A_2O$ | 0.00 | 0.00 | 0.00 | 0.00 | 0.00 |
| $\Sigma EO$ | 14.74 | 15.14 | 15.53 | 15.53 | 15.53 |
| $\Sigma Ln_2O_3$ | 9.54 | 8.57 | 7.60 | 7.60 | 7.60 |
| (Bi+B+Y+La +Gd)/Te | 0.28 | 0.29 | 0.27 | 0.27 | 0.27 |

[Table 11]

| COMPONENTS | EXAMPLE 51 | EXAMPLE 52 | EXAMPLE 53 | EXAMPLE 54 | EXAMPLE 55 |
|---|---|---|---|---|---|
| $TeO_2$ | 55. 76 | 55. 76 | 55. 76 | 55. 76 | 55. 90 |
| $Bi_2O_3$ | 0. 87 | 0. 87 | 0. 87 | 0. 87 | 2. 92 |
| $ZnO$ | 14. 74 | 10. 74 | 14. 74 | 10. 74 | 10. 73 |
| $B_2O_3$ | 4. 89 | 4. 89 | 4. 89 | 4. 89 | 4. 48 |
| $Li_2O$ | | | | | |
| $Na_2O$ | | | | | |
| $K_2O$ | | | | | |
| $MgO$ | | 4. 00 | | 4. 00 | 4. 80 |
| $CaO$ | | | | | |
| $SrO$ | | | | | |
| $BaO$ | | | | | |
| $Al_2O_3$ | | | | | |
| $Y_2O_3$ | 1. 42 | 1. 42 | 1. 42 | 0. 00 | 3.60 |
| $La_2O_3$ | 8. 12 | 8. 12 | 8. 12 | 9. 54 | 4. 00 |
| $Gd_2O_3$ | | | | | |
| $TiO_2$ | | | | | |
| $ZrO_2$ | 1. 20 | 1. 20 | 2. 20 | 1. 20 | 3. 00 |
| $Nb_2O_5$ | 4.00 | 4. 00 | 3. 00 | 4.00 | |
| $Ta_2O_5$ | | | | | |
| $WO_3$ | 9.00 | 9.00 | 9.00 | 9. 00 | 10. 57 |
| $Sb_2O_3$ | | | | | |
| total | 100.00 | 100.00 | 100.00 | 100.00 | 100.00 |
| $n_d$ | 2.05250 | 2.04835 | 2.04756 | 2.04865 | 2.04670 |
| $n_c$ | 2.03884 | 2.03479 | 2.03412 | 2.03512 | 2.03287 |
| $n_F$ | 2.08687 | 2.08246 | 2.08133 | 2.08278 | 2.08161 |
| $n_g$ | 2.11684 | 2.11219 | 2.11072 | 2.11246 | 2.11221 |
| $n_{1550}$ | 1.99314 | 1.98932 | 1.98907 | 1.98964 | 1.98696 |
| $V_d$ | 21.92 | 21.99 | 22.19 | 22.00 | 21.47 |

(continued)

| COMPONENTS | EXAMPLE 51 | EXAMPLE 52 | EXAMPLE 53 | EXAMPLE 54 | EXAMPLE 55 |
|---|---|---|---|---|---|
| $P_{g,F}$ | 0.624 | 0.624 | 0.623 | 0.623 | 0.628 |
| $\triangle P_{g,F}$ | 0.016 | 0.016 | 0.016 | 0.015 | 0.019 |
| $\Sigma A_2O$ | 0.00 | 0.00 | 0.00 | 0.00 | 0.00 |
| $\Sigma EO$ | 14.74 | 14.74 | 14.74 | 14.74 | 15.53 |
| $\Sigma Ln_2O_3$ | 9.54 | 9.54 | 9.54 | 9.54 | 7.60 |
| (Bi+B+Y+La +Gd)/Te | 0.27 | 0.27 | 0.27 | 0.27 | 0.27 |

[Table 12]

| COMPONENTS | EXAMPLE 56 | EXAMPLE 57 | EXAMPLE 58 | EXAMPLE 59 | EXAMPLE 60 |
|---|---|---|---|---|---|
| $TeO_2$ | 55. 90 | 55. 76 | 55. 76 | 55. 90 | 50. 90 |
| $Bi_2O_3$ | 2. 92 | 1. 22 | 3. 22 | 2. 92 | 2. 92 |
| $ZnO$ | 10. 73 | 14. 74 | 10. 74 | 10. 53 | 10. 53 |
| $B_2O_3$ | 4. 48 | 4. 89 | 4. 89 | 9. 48 | 9. 48 |
| $Li_2O$ | | | | | |
| $Na_2O$ | | | | | |
| $K_2O$ | | | | | |
| $MgO$ | 4. 80 | | 4. 00 | | |
| $CaO$ | | | | | |
| $SrO$ | | | | | |
| $BaO$ | | | | | |
| $Al_2O_3$ | | | | | |
| $Y_2O_3$ | 1. 60 | 1. 42 | 1. 42 | 3. 03 | 3. 03 |
| $La_2O_3$ | 6. 00 | 8. 12 | 8. 12 | 4. 57 | 4. 57 |
| $Gd_2O_3$ | | | | | |
| $TiO_2$ | | | | | |
| $ZrO_2$ | 3. 00 | 1. 20 | 2. 20 | 3. 00 | 3. 00 |
| $Nb_2O_5$ | | 4. 00 | 3. 00 | | |
| $Ta_2O_5$ | | | | | |
| $WO_3$ | 10. 57 | 8. 65 | 6. 65 | 10. 57 | 15. 57 |
| $Sb_2O_3$ | | | | | |
| total | 100.00 | 100.00 | 100.00 | 100.00 | 100.00 |
| $n_d$ | 2.05018 | 2.05586 | 2.05428 | 2.04037 | 2.04630 |
| $n_c$ | 2.03628 | 2.04210 | 2.04046 | 2.02669 | 2.03247 |
| $n_F$ | 2.08524 | 2.09053 | 2.08927 | 2.07486 | 2.08124 |
| $n_g$ | 2.11599 | 2.12078 | 2.11982 | 2.10510 | 2.11197 |
| $n_{1550}$ | 1.99027 | 1.99611 | 1.99425 | 1.98087 | 1.98611 |
| $V_d$ | 21.45 | 21.80 | 21.60 | 21.60 | 21.45 |
| $P_{g, F}$ | 0.628 | 0.624 | 0.626 | 0.628 | 0.630 |
| $\triangle P_{g,F}$ | 0.020 | 0.017 | 0.018 | 0.020 | 0.022 |

(continued)

| COMPONENTS | EXAMPLE 56 | EXAMPLE 57 | EXAMPLE 58 | EXAMPLE 59 | EXAMPLE 60 |
|---|---|---|---|---|---|
| $\Sigma$ A$_2$O | 0.00 | 0.00 | 0.00 | 0.00 | 0.00 |
| $\Sigma$ EO | 15.53 | 14.74 | 14.74 | 10.53 | 10.53 |
| $\Sigma$ Ln$_2$O$_3$ | 7.60 | 9.54 | 9.54 | 7.60 | 7.60 |
| (Bi+B+Y+La +Gd)/Te | 0.27 | 0.28 | 0.32 | 0.36 | 0.39 |

[Table 13]

| COMPONENTS | EXAMPLE 61 | EXAMPLE 62 | EXAMPLE 63 | COMPARATIVE EXAMPLE 1 |
|---|---|---|---|---|
| TeO$_2$ | 50.90 | 50.76 | 40.61 | 39.4 |
| Bi$_2$O$_3$ | 7.92 | 5.07 | 6.83 | 6.97 |
| ZnO | 10.53 | 10.74 | 20.67 | 21.08 |
| B$_2$O$_3$ | 9.48 | 8.89 | 14.42 | 14.73 |
| Li$_2$O | | | | |
| Na$_2$O | | | | |
| K$_2$O | | | | |
| MgO | | | | |
| CaO | | | | |
| SrO | | | | |
| BaO | | | | |
| Al$_2$O$_3$ | | | | |
| Y$_2$O$_3$ | 3.03 | 1.42 | 0.93 | 0.95 |
| La$_2$O$_3$ | 4.57 | 8.12 | 8.44 | 8.61 |
| Gd$_2$O$_3$ | | | | |
| TiO$_2$ | | | | |
| ZrO$_2$ | 3.00 | 2.20 | 2.16 | 2.2 |
| Nb$_2$O$_5$ | | 3.00 | 3.25 | 3.31 |
| Ta$_2$O$_5$ | | | | |
| WO$_3$ | 10.57 | 9.80 | 2.70 | 2.75 |
| Sb$_2$O$_3$ | | | | |
| total | 100.00 | 100.00 | 100.00 | 100.00 |
| $n_d$ | 2.07511 | 2.06744 | 2.02528 | UNMEASURABLE |
| $n_c$ | 2.06013 | 2.05312 | 2.01231 | |
| $n_F$ | 2.11325 | 2.10371 | 2.05793 | |
| $n_g$ | 2.14714 | 2.13570 | 2.08646 | |
| $n_{1550}$ | 2.01098 | 2.00552 | 1.96828 | |
| $V_d$ | 20.24 | 21.10 | 22.47 | |
| $P_{g,F}$ | 0.638 | 0.632 | 0.625 | |
| $\triangle P_{g,F}$ | 0.028 | 0.023 | 0.019 | |
| $\Sigma$ A$_2$O | 0.00 | 0.00 | 0.00 | 0.00 |
| $\Sigma$ EO | 10.53 | 10.74 | 20.67 | 21.08 |

(continued)

| COMPONENTS | EXAMPLE 61 | EXAMPLE 62 | EXAMPLE 63 | COMPARATIVE EXAMPLE 1 |
|---|---|---|---|---|
| $\Sigma$ Ln$_2$O$_3$ | 7.60 | 9.54 | 9.37 | 9.56 |
| (Bi+B+Y+La +Gd)/Te | 0.49 | 0.46 | 0.75 | 0.79 |

From above, it was confirmed that the optical glass of the present example had a refractive index of approximately 2 in the near-infrared range while having a high refractive index, high dispersion, and low abnormal dispersion.

Reference Signs List

1 Imaging device
101 Camera body
102 Lens barrel
103 Lens
104 Sensor chip
105 Glass substrate
106 Multi-chip module
CAM Imaging device (fixed lens camera)
WL Photographing lens
M Liquid crystal monitor
EF Auxiliary light emitting unit
B1 Release button
B2 Function button
2 Multi-photon microscope
201 Pulse laser device
202 Pulse division device
203 Beam adjustment unit
204, 205, 212 Dichroic mirror
206 Objective lens
207, 211, 213 Fluorescence detection unit
208 Condensing lens
209 Pinhole
210 Image forming lens
S Sample
3 Cemented lens
301 First lens element
302 Second lens element
303 Bonding member
401 Position measuring device
402 Reflective element
403 Irradiation unit
404 Light reception unit
405 Workpiece

**Claims**

1.　An optical glass comprising:

by mol%,
40 to 85% of a content rate of TeO$_2$;
10 to 40% of a content rate of ZnO;
at least one of B$_2$O$_3$ and Bi$_2$O$_3$; and
at least one of La$_2$O$_3$ and WO$_3$.

2. The optical glass according to claim 1, wherein

   by mol%,
   a content rate of $B_2O_3$ is from 0 to 20%; and
   a content rate of $Bi_2O_3$ is from 0 to 10%.

3. The optical glass according to claim 1 or 2, wherein

   by mol%,
   a content rate of $La_2O_3$ is from 0 to 15%; and
   a content rate of $WO_3$ is from 0 to 20%.

4. The optical glass according to any one of claims 1 to 3, further comprising:

   by mol%,
   0 to 15% of a content rate of $Y_2O_3$; and
   0 to 15% of a content rate of $Gd_2O_3$.

5. An optical glass comprising:

   by mol%,
   40 to 85% of a content rate of $TeO_2$;
   10 to 40% of a content rate of $ZnO$;
   0 to 20% of a content rate of $B_2O_3$;
   0 to 10% of a content rate of $Bi_2O_3$; and
   at least one of $Y_2O_3$, $La_2O_3$, and $Gd_2O_3$.

6. The optical glass according to claim 5, wherein

   by mol%,
   the content rate of $B_2O_3$ is over 0 to 20%; and
   the content rate of $Bi_2O_3$ is over 0 to 10%.

7. The optical glass according to claim 5 or 6, wherein

   by mol%,
   a content rate of $Y_2O_3$ is from 0 to 15%;
   a content rate of $La_2O_3$ is from 0 to 15%; and
   a content rate of $Gd_2O_3$ is from 0 to 15%.

8. The optical glass according to any one of claims 5 to 7, further comprising:
   0 to 20% of a content rate of $WO_3$.

9. The optical glass according to any one of claims 1 to 8, wherein
   a total content rate of $Y_2O_3$, $La_2O_3$, and $Gd_2O_3$ ($\Sigma Ln_2O_3$, where Ln = Y, La, Gd) is from 0 to 15%.

10. The optical glass according to any one of claims 1 to 9, further comprising:

    by mol%,
    0 to 10% of a content rate of $Li_2O$;
    0 to 10% of a content rate of $Na_2O$; and
    0 to 10% of a content rate of $K_2O$.

11. The optical glass according to any one of claims 1 to 10, further comprising:

    by mol%,
    0 to 5% of a content rate of SrO;
    0 to 5% of a content rate of BaO;

0 to 10% of a content rate of CaO; and
0 to 10% of a content rate of MgO.

12. The optical glass according to any one of claims 1 to 11, further comprising:

by mol%,
0 to 5% of a content rate of $Al_2O_3$;
0 to 5% of a content rate of $TiO_2$;
0 to 5% of a content rate of $ZrO_2$;
0 to 5% of a content rate of $Nb_2O_5$; and
0 to 5% of a content rate of $Ta_2O_5$.

13. The optical glass according to any one of claims 1 to 12, wherein

by mol%,
a ratio of a total content rate of $Bi_2O_3$, $B_2O_3$, $Y_2O_3$, $La_2O_3$, and $Gd_2O_3$ with respect to the content rate of $TeO_2$ $((Bi_2O_3 + B_2O_3 + Y_2O_3 + La_2O_3 + Gd_2O_3)/TeO_2)$ is from 0 to 0.8.

14. The optical glass according to any one of claims 1 to 13, wherein

by mol%,
a total content rate of $Li_2O$, $Na_2O$, and $K_2O$ ($\Sigma A_2O$, where A = Li, Na, K) is from 0 to 10%.

15. The optical glass according to any one of claims 1 to 14, wherein

by mol%,
a total content rate of SrO, BaO, CaO, and MgO (ZEO, where E = Sr, Ba, Ca, Mg) is from 10 to 40%.

16. The optical glass according to any one of claims 1 to 15, wherein
a refractive index ($n_d$) with respect to the d-line is from 1.95 to 2.2.

17. The optical glass according to any one of claims 1 to 16, wherein
an abbe number is from 15 to 30.

18. The optical glass according to any one of claims 1 to 17, wherein
a partial dispersion ratio ($P_{g, F}$) is from 0.55 to 0.68.

19. The optical glass according to any one of claims 1 to 18, wherein
a refractive index ($n_{1550}$) with respect to a wavelength of 1550 nm is from 1.9 to 2.1.

20. An optical element using the optical glass according to any one of claims 1 to 19.

21. An optical device comprising the optical element according to claim 20.

22. A reflective element comprising the optical element according to claim 20.

23. A position measuring device comprising:

a reflective element provided to a measurement target object;
an irradiation unit configured to irradiate the reflective element with measurement light; and
a light reception unit configured to receive the measurement light reflected on the reflective element, wherein
the reflective element is the reflective element according to claim 22.

24. An interchangeable camera lens comprising the optical element according to claim 20.

25. A microscope objective lens comprising the optical element according to claim 20.

26. A cemented lens comprising:

a first lens element; and
a second lens element, wherein
at least one of the first lens element and the second lens element is the optical glass according to any one of claims 1 to 19.

27. An optical system comprising the cemented lens according to claim 26.

28. An interchangeable camera lens comprising the optical system according to claim 27.

29. A microscope objective lens comprising the optical system according to claim 27.

30. An optical device comprising the optical system according to claim 27.

*Fig. 1*

*Fig. 2*

*Fig. 3*

CAM

B1

B2

M

*Fig. 4*

*Fig. 5*

*Fig.6A*

405

402

404・403

401

*Fig.6B*

405

402

404・403

401

Fig. 7

<div align="center">

**INTERNATIONAL SEARCH REPORT**

</div>

| | International application No. |
|---|---|
| | **PCT/JP2023/006625** |

| **A.** | **CLASSIFICATION OF SUBJECT MATTER** |
|---|---|

*C03C 3/14*(2006.01)i; *C03C 3/12*(2006.01)i; *C03C 3/145*(2006.01)i; *C03C 3/15*(2006.01)i; *C03C 3/155*(2006.01)i; *G02B 1/00*(2006.01)i

FI:   C03C3/14; C03C3/12; C03C3/145; C03C3/15; C03C3/155; G02B1/00

According to International Patent Classification (IPC) or to both national classification and IPC

| **B.** | **FIELDS SEARCHED** |
|---|---|

Minimum documentation searched (classification system followed by classification symbols)

   C03C1/00-14/00

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

   INTERGLAD

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2010-105906 A (OHARA INC) 13 May 2010 (2010-05-13) | 1-14, 16-30 |
| | paragraphs [0001]-[0002], examples | |
| A | | 15 |
| X | WO 2006/001346 A1 (ASAHI GLASS COMPANY, LIMITED) 05 January 2006 (2006-01-05) | 1-14, 16-30 |
| | paragraph [0001], examples | |
| A | | 15 |
| X | JP 2004-43294 A (ASAHI GLASS COMPANY, LIMITED) 12 February 2004 (2004-02-12) | 1-5, 7-14, 16-30 |
| | paragraph [0001], examples | |
| A | | 6, 15 |
| X | WO 2021/221376 A1 (KOREA PHOTONICS TECHNOLOGY INSTITUTE) 04 November 2021 (2021-11-04) | 5, 7-14, 16-30 |
| | paragraphs [0007]-[0008], [0096], [0107]-[0112] | |
| A | | 1-4, 6, 15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/006625** |

| Patent document cited in search report | | | Publication date (day/month/year) | Patent family member(s) | Publication date (day/month/year) |
| --- | --- | --- | --- | --- | --- |
| JP | 2010-105906 | A | 13 May 2010 | (Family: none) | |
| WO | 2006/001346 | A1 | 05 January 2006 | US 2007/0105702 A1 paragraph [0001], examples KR 10-2007-0028427 A CN 1968904 A | |
| JP | 2004-43294 | A | 12 February 2004 | US 2004/0235634 A1 paragraphs [0001]-[0002], examples | |
| WO | 2021/221376 | A1 | 04 November 2021 | JP 2023-502639 A paragraphs [0007]-[0008], [0038], [0049]-[0050] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022053320 A

- JP 2006219365 A